# EUROPEAN PATENT APPLICATION

(11) **EP 3 318 585 A1**
(43) Date of publication of application: **09.05.2018**
(21) Application number: 16821319.7
(22) Date of filing: 01.07.2016
(51) Int. Cl.: C08F 230/02, C09D 5/16, C09D 201/02

(54) **ION COMPLEX MATERIAL HAVING ABILITY TO INHIBIT ADHESION OF BIOLOGICAL MATERIALS, AND METHOD FOR PRODUCING SAME**

(30) Priority: 03.07.2015 JP 2015134401
(71) Applicant: Nissan Chemical Industries, Ltd., Chiyoda-ku Tokyo 101-0054 (JP)
(72) Inventor: HIROI, Yoshiomi, Toyama-shi Toyama 939-2753 (JP); ENDO, Masahisa, Toyama-shi Toyama 939-2753 (JP); ABE, Natsuki, Shiraoka-shi Saitama 349-0294 (JP); NISHINO, Taito, Shiraoka-shi Saitama 349-0294 (JP)
(74) Representative: dompatent von Kreisler Selting Werner - Partnerschaft von Patent- und Rechtsanwälten mbB
(86) International application number: PCT/JP2016/069602
(87) International publication number: WO 2017/006850

(57) **Abstract**

The present invention provides a copolymer or the like obtained by polymerizing a monomer mixture that includes at least compounds represented by formulas (A) and (B) (in the formulas, T^{a}, T^{b}, Q^{a}, Q^{b}, R^{a}, R^{b}, U^{a1}, U^{a2}, U^{a3}, U^{b1}, U^{b2}, U^{b3}, An⁻, and m are as defined in the description and claims). This copolymer can be used as an ion complex material having an exceptional ability to inhibit adhesion of biological materials.

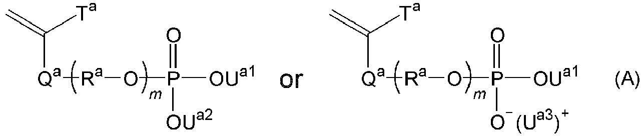

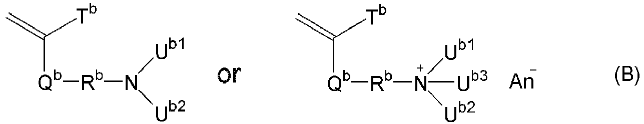

## Description

### TECHNICAL FIELD

The present invention relates to an ion complex material having a function of inhibiting adhesion of a biological substance and a method for manufacturing the same. More specifically, the present invention relates to a coating film having a function of inhibiting adhesion of a biological substance, a method for manufacturing the coating film, a copolymer obtainable by polymerizing a specific monomer mixture, and a composition for forming a coating film having a specific composition.

### BACKGROUND ART

For suppressing adhesion of a biological substance to medical instruments, equipment, etc., such as an artificial dialyzer, artificial organs, medical equipment, etc., various coating materials having a function of inhibiting adhesion of a biological substance have been proposed.

A material having a polymer material containing a cation and an anion at the side chain on the surface thereof has been known to have a function of preventing adsorption of a biological substance (protein, cell, etc.) by being maintained to electrically neutral at the surface thereof due to electrostatic balance. In addition, it has also been proposed a coating material using such a function, and various reports have been made on the fixation or immobilization method to glass or a polymer substrate, etc. For example, in Non-Patent Document 1, it has been reported that surface modification was accomplished by chemical adsorption with a glass substrate using a polymer obtained by copolymerizing 2-methacryloyloxyethyl phosphoryl-choline (MPC) having a similar molecular structure to a phospholipid as a charge neutralization unit and 3-(trimethoxysilyl)propyl methacrylate having a silane coupling group. On the other hand, it has also been reported that onto a polymer substrate, a polymer into which butyl methacrylate has been copolymerized is to be fixed onto the substrate by aiming physical adsorption due to hydrophobic interaction.

Also, in Patent Document 1, a coating film which is obtained by a film formed from a coating solution containing a polymer having a phosphoric acid ester group by subjecting to heat treatment at 200 to 450°C has been disclosed. To suppress elution of the coating film into an aqueous medium, it is necessary to carry out the heat treatment at a high temperature of 200 to 450°C after coating it onto a substrate, so that a heating device such as an oven, a hot plate, etc., is necessary for the heat treatment.

Further, in Patent Document 2, there are disclosed a novel acrylic phosphoric acid ester amine salt monomer (half salt) obtained by reacting an amine with an acrylic acidic phosphoric acid ester monomer in the presence of water to selectively proceed an acid-base reaction and a method for manufacturing the same. The amine salt (half salt) monomer has been disclosed to have a wide range of uses and usefulness in the field of a photosensitive resin for providing rubber elasticity or a modifier of an oil-soluble substance, but it is unclear about polymerization reactivity of the amine salt (half salt) monomer itself in water, and a function of inhibiting adhesion of the obtained polymer to a biological substance.

Furthermore, in Patent Document 3, there is disclosed a one-liquid type and a photopolymerization type adhesive for bonding dentine containing 2-methacryloyloxyethyl phenyl hydrogen phosphate and 1,6-bis(methacryloxy-2-ethoxycarbonylamino)-2,2,4-trimethylhexane, but it is unclear about a function of inhibiting adhesion of the obtained polymer to a biological substance.

### PRIOR ART DOCUMENTS

### Patent Documents

Patent Document 1: JP 2007-63459A
Patent Document 2: JP Hei.6-92979A
Patent Document 3: JP 2006-76973A

### Non-Patent Document

Non-Patent document 1: Japanese Journal of Polymer Science and Technology, Vol.65, No.3, pp.228 (2008)

### SUMMARY OF THE INVENTION

### Problems to be Solved by the Invention

In particular, a commercially available product of the acid phosphoxyethyl methacrylate (PMA) which has been used as a starting material of the polymer contained in the coating film of Patent Document 1 has defects that an amount of impurities is large (an objective substance is contained with a half or less amount alone), so that an accurate molar number of the counter ion cannot be grasped; dimethacrylate is contained in the PMA as an impurity so that it is used, the product is likely three-dimensionallized (gelled); and the PMA is markedly hydrolyzed at a pH<4 even at the room temperature so that handling thereof is difficult. The present inventors have intensively studied so far to solve the above-mentioned problems. An object of the present invention is, in addition to the above-mentioned problems, to further improve a function of inhibiting adhesion of a biological substance of the coating film, and to improve handling property of a composition for forming a coating film in the manufacture thereof, in particular, to provide a coating film having a function of inhibiting adhesion of a biological substance which can be easily formed only by a low temperature drying process, a method for manufacturing the coating film, u, and a composition for forming a coating film having a specific composition.

### MEANS TO SOLVE THE PROBLEMS

The present invention is as follows:
1. A copolymer which is obtainable by polymerizing a monomer mixture which contains at least compounds of the following formulae (A) and (B): 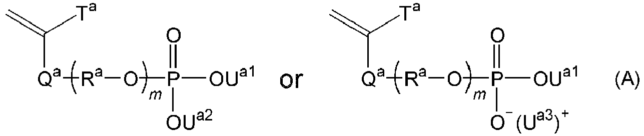 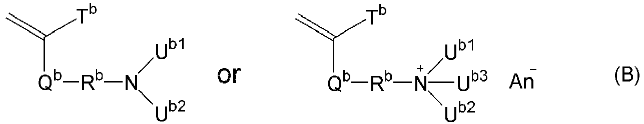 [wherein
   T^{a} and T^{b} each independently represent a hydrogen atom or a linear or branched alkyl group having 1 to 5 carbon atoms;
   Q^{a} and Q^{b} each independently represent a single bond, an ester bond or an amide bond;
   R^{a} and R^{b} each independently represent a linear or branched alkylene group having 1 to 10 carbon atoms which may be substituted by a halogen atom(s);
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms;
   An⁻ represents an anion selected from the group consisting of a halide ion, an inorganic acid ion, a hydroxide ion and an isothiocyanate ion; and
   m represents an integer of 0 to 6].
2. The copolymer described in the above-mentioned 1, wherein the monomer mixture further contains a compound of the following formula (C): 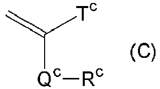 [wherein
   T^{c} each independently represents a hydrogen atom or a linear or branched alkyl group having 1 to 5 carbon atoms;
   Q^{c} represents a single bond, an ether bond or an ester bond; and
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
3. A composition for forming a coating film which contains
   (i) a copolymer which contains a recurring unit containing an organic group of the following formula (a) and a recurring unit containing an organic group of the following formula (b): 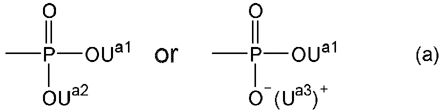 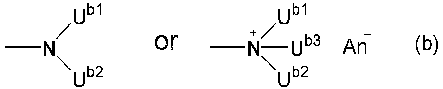 (wherein
      U^{a1} represents an aryl group having 6 to 10 carbon atoms or a linear or branched alkyl group having 1 to 5 carbon atoms, U^{a2} represents a hydrogen atom, U^{a3} represents an alkali metal;
      U^{b1}, U^{b2} and U^{b3} each independently represent a hydrogen atom or a linear or branched alkyl group having 1 to 5 carbon atoms; and
      An⁻ represents an anion selected from the group consisting of a halide ion, an inorganic acid ion, a hydroxide ion and an isothiocyanate ion) and (ii) a solvent.
4. The composition described in the above-mentioned 3, wherein the copolymer further contains recurring a recurring unit containing an organic group of the following formula (c):

   -R^{c} (c)

   [wherein
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
5. The composition described in the above-mentioned 3 or 4, wherein the copolymer contains recurring units of the following formulae (a1) and (b1): 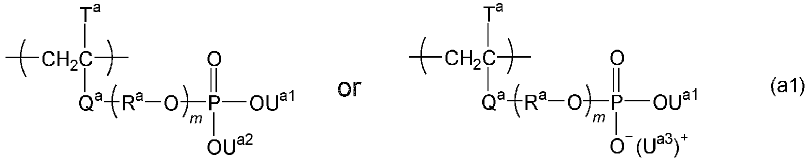 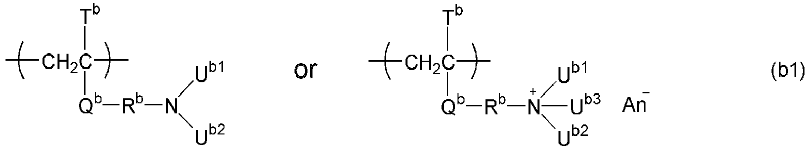 [wherein
   T^{a} and T^{b} each independently represent a hydrogen atom or a linear or branched alkyl group having 1 to 5 carbon atoms;
   Q^{a} and Q^{b} each independently represent a single bond, an ester bond or an amide bond; R^{a} and R^{b} each independently represent a linear or branched alkylene group having 1 to 10 carbon atoms which may be substituted by a halogen atom(s);
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms;
   An⁻ represents an anion selected from the group consisting of a halide ion, an inorganic acid ion, a hydroxide ion and an isothiocyanate ion; and
   m represents an integer of 0 to 6].
6. The composition described in any one of the above-mentioned 3 to 5, wherein the copolymer further contains a recurring unit of the following formula (c1): 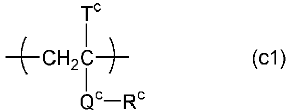 [wherein
   T^{c} each independently represents a hydrogen atom or a linear or branched alkyl group having 1 to 5 carbon atoms;
   Q^{c} represents a single bond, an ether bond or an ester bond;
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
7. A coating film obtainable by a method which comprises a process of coating a composition for forming a coating film which contains a copolymer containing a recurring unit containing an organic group of the following formula (a) and a recurring unit containing an organic group of the following formula (b): 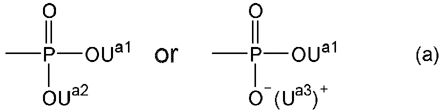 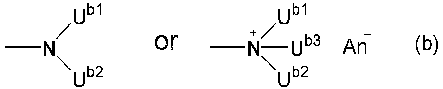 (wherein
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms;
   An⁻ represents an anion selected from the group consisting of a halide ion, an inorganic acid ion, a hydroxide ion and an isothiocyanate ion) and
   a solvent, onto a substrate.
8. The coating film described in the above-mentioned 7, wherein the copolymer further contains a recurring unit containing an organic group of the following formula (c):

   -R^{c} (c)

   [wherein
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
9. The coating film described in the above-mentioned 7 or 8, wherein the copolymer contains recurring units of the following formulae (a1) and (b1): 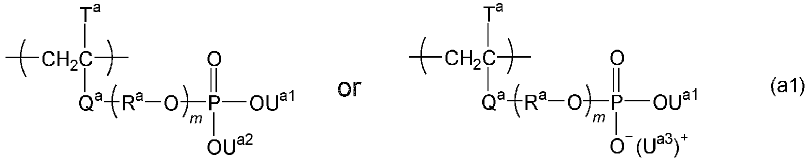 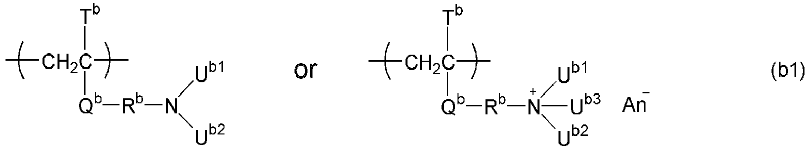 [wherein
   T^{a} and T^{b} each independently represent a hydrogen atom or a linear or branched alkyl group having 1 to 5 carbon atoms;
   Q^{a} and Q^{b} each independently represent a single bond, an ester bond or an amide bond; R^{a} and R^{b} each independently represent a linear or branched alkylene group having 1 to 10 carbon atoms which may be substituted by a halogen atom(s);
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms;
   An⁻ represents an anion selected from the group consisting of a halide ion, an inorganic acid ion, a hydroxide ion and an isothiocyanate ion; and
   m represents an integer of 0 to 6].
10. The coating film described in any one of the above-mentioned 7 to 9, wherein the copolymer further contains a recurring unit of the following formula (c1): 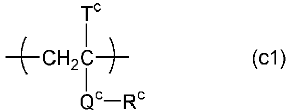 [wherein
   T^{c} each independently represents a hydrogen atom or a linear or branched alkyl group having 1 to 5 carbon atoms;
   Q^{c} represents a single bond, an ether bond or an ester bond;
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
11. The coating film described in any one of the above-mentioned 7 to 10, wherein the method further comprises a process of washing a film obtained after a drying process with at least one kind of a solvent selected from the group consisting of water and an aqueous solution containing an electrolyte.
12. The coating film described in any one of the above-mentioned 7 to 11, wherein the film has a function of inhibiting adhesion of a biological substance.
13. A method for manufacturing a coating film which comprises a process of coating a composition for forming a coating film which comprises a copolymer containing a recurring unit containing an organic group of the following formula (a) and a recurring unit containing an organic group of the following formula (b): 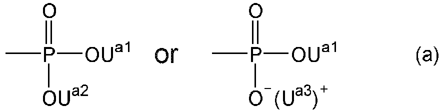 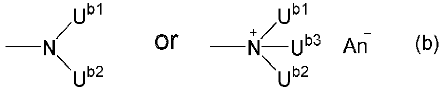 (wherein
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms;
   An⁻ represents an anion selected from the group consisting of a halide ion, an inorganic acid ion, a hydroxide ion and an isothiocyanate ion) and
   a solvent, onto a substrate.
14. The method for manufacturing a coating film described in the above-mentioned 13, wherein the copolymer further contains a recurring unit containing an organic group of the following formula (c):

   -R^{c} (c)

   [wherein
   R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].
15. A cell culture vessel which comprises a coating film containing a copolymer which contains a recurring unit containing an organic group of the following formula (a) and a recurring unit containing an organic group of the following formula (b): 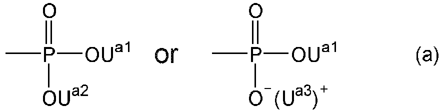 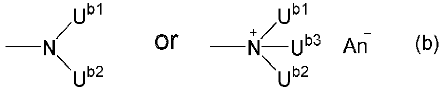 (wherein
   U^{a1} represents an aryl group having 6 to 10 carbon atoms or a linear or branched alkyl group having 1 to 5 carbon atoms, U^{a2} represents a hydrogen atom, U^{a3} represents an alkali metal;
   U^{b1}, U^{b2} and U^{b3} each independently represent a hydrogen atom or a linear or branched alkyl group having 1 to 5 carbon atoms; and
   An⁻ represents an anion selected from the group consisting of a halide ion, an inorganic acid ion, a hydroxide ion and an isothiocyanate ion)
   provided on at least a part of a surface.

### Effects of the Invention

The coating film of the present invention can be formed by subjecting to a process of coating a composition for forming a coating film containing a copolymer which contains an anion of the formula (a), a cation of the formula (b) and, if necessary, a hydrophobic group of the formula (c), and a solvent, onto a substrate. In the coating film of the present invention, by using, for example, a compound of the formula (A) in place of PMA, it can avoid the defect brought by impurities of the PMA, and hydrolysis resistance of the coating film can be also improved. In addition, the coating film of the present invention can be firmly fixed without selecting a kind of the substrate such as glass, metal, a metal containing compound or a semi-metal containing compound, activated charcoal or a resin (a synthetic resin and a natural resin), etc., by forming an ionic bonding (ion complex) of the anion of the formula (a), and the cation of the formula (b), and after fixation, it gives a coating film excellent in durability against an aqueous solvent (water, a phosphate buffered physiological saline (PBS), an alcohol, etc.). Further, it becomes a film having good adhesiveness with a resin such as plastics, etc., and more excellent in durability to an aqueous solvent after fixation, by incorporating the hydrophobic group of the formula (c), if necessary. Also, since ion balance of the copolymer is controlled, it gives a coating film excellent in a function of inhibiting adhesion of a biological substance by previously adjusting a pH of the composition for forming a coating film with a pH adjusting agent, etc., or by washing the coating film after drying with water and/or an aqueous solution containing an electrolyte(s).

### BRIEF DESCRIPTION OF THE DRAWING

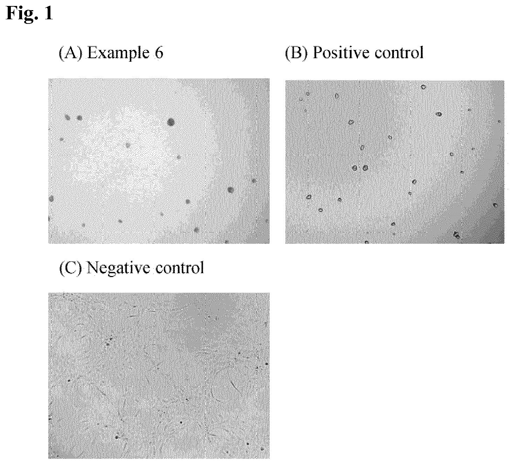

Fig.1 shows the results in which adhesion of the cells to the plates of positive control and negative control of Example 6 was observed by an inverted microscope after 4 days of culture in Test example 2.

### EMBODIMENTS TO CARRY OUT THE INVENTION

### <<Explanation of the terms>>

The terms used in the present invention have the following definitions, otherwise specifically mentioned.

In the present invention, the "halogen atom" means a fluorine atom, a chlorine atom, a bromine atom or an iodine atom.

In the present invention, the "alkyl group" means a linear or branched, saturated monovalent aliphatic hydrocarbon group. The "linear or branched alkyl group having 1 to 5 carbon atoms" may be mentioned, for example, a methyl group, an ethyl group, an n-propyl group, an isopropyl group, an n-butyl group, an isobutyl group, an s-butyl group, a t-butyl group, an n-pentyl group, a 1-methylbutyl group, a 2-methylbutyl group, a 3-methylbutyl group, a 1,1-dimethylpropyl group, a 1,2-dimethylpropyl group, a 2,2-dimethylpropyl group or a 1-ethylpropyl group. The "linear or branched alkyl group having 1 to 18 carbon atoms" may be mentioned, in addition to the examples of the "linear or branched alkyl group having 1 to 5 carbon atoms", a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group or an octadecyl group, or an isomer thereof.

In the present invention, the "linear or branched alkyl group having 1 to 5 carbon atoms which may be substituted by a halogen atom(s)" means either the above-mentioned linear or branched alkyl group having 1 to 5 carbon atoms, or the above-mentioned linear or branched alkyl group having 1 to 5 carbon atoms substituted by one or more of the above-mentioned halogen atoms. Examples of the "linear or branched alkyl group having 1 to 5 carbon atoms" are as mentioned above. On the other hand, the "linear or branched alkyl group having 1 to 5 carbon atoms substituted by one or more halogen atoms" means a group in which one or more optional hydrogen atoms of the above-mentioned linear or branched alkyl group having 1 to 5 carbon atoms is/are substituted by a halogen atom(s), and examples thereof may be mentioned a fluoromethyl group, a difluoromethyl group, a trifluoromethyl group, a chloromethyl group, a dichloromethyl group, a trichloromethyl group, a bromomethyl group, an iodomethyl group, a 2,2,2-trifluoroethyl group, a 2,2,2-trichloroethyl group, a perfluoroethyl group, a perfluorobutyl group or a perfluoropentyl group, etc.

In the present invention, the "ester bond" means -C(=O)-O- or -O-C(=O)-, the "amide bond" means -NHC(=O)- or -C(=O)NH- and the ether bond means -O-.

In the present invention, the "linear or branched alkylene group having 1 to 10 carbon atoms which may be substituted by a halogen atom(s)" means a linear or branched alkylene group having 1 to 10 carbon atoms or a linear or branched alkylene group having 1 to 10 carbon atoms substituted by one or more halogen atoms. Here, the "alkylene group" means a divalent organic group corresponding to the above-mentioned alkyl group. Examples of the "linear or branched alkylene group having 1 to 10 carbon atoms" may be mentioned a methylene group, an ethylene group, a propylene group, a trimethylene group, a tetramethylene group, a 1-methylpropylene group, a 2-methylpropylene group, a dimethylethylene group, an ethylethylene group, a pentamethylene group, a 1-methyl-tetramethylene group, a 2-methyl-tetramethylene group, a 1,1-dimethyl-trimethylene group, a 1,2-dimethyl-trimethylene group, a 2,2-dimethyl-trimethylene group, a 1-ethyl-trimethylene group, a hexamethylene group, an octamethylene group and a decamethylene group, etc., among these, an ethylene group, a propylene group, an octamethylene group and a decamethylene group are preferred, and, for example, a linear or branched alkylene group having 1 to 5 carbon atoms such as an ethylene group, a propylene group, a trimethylene group, a tetramethylene group, etc., are more preferred, and, in particular, an ethylene group or a propylene group is preferred. The "linear or branched alkylene group having 1 to 10 carbon atoms substituted by one or more halogen atoms" means a group in which one or more optional hydrogen atoms of the above-mentioned alkylene group is/are substituted by a halogen atom(s), and, in particular, a part or whole of the hydrogen atom(s) of the ethylene group or the propylene group is/are substituted by a halogen atom(s) is/are preferred.

In the present invention, the "cyclic hydrocarbon group having 3 to 10 carbon atoms" means a monocyclic or polycyclic, saturated or partially unsaturated, monovalent aliphatic hydrocarbon group having 3 to 10 carbon atoms. Among these, a monocyclic or bicyclic, saturated monovalent aliphatic hydrocarbon group having 3 to 10 carbon atoms is preferred, and there may be mentioned, for example, a cycloalkyl group having 3 to 10 carbon atoms such as a cyclopropyl group, a cyclobutyl group and a cyclohexyl group, etc., or a bicycloalkyl group having 4 to 10 carbon atoms such as a bicyclo[3.2.1]octyl group, a bornyl group and an isobornyl group, etc.

In the present invention, the "aryl group having 6 to 10 carbon atoms" means a monovalent monocyclic or polycyclic, aromatic hydrocarbon group having 6 to 10 carbon atoms, and there may be mentioned, for example, a phenyl group, a naphthyl group or an anthryl group, etc. The "aryl group having 6 to 10 carbon atoms" may be substituted by one or more of the above-mentioned "linear or branched alkyl group having 1 to 5 carbon atoms which may be substituted by a halogen atom(s)."

In the present invention, the "aralkyl group having 7 to 15 carbon atoms" means a group -R-R' (here, R represents the above-mentioned "alkylene group having 1 to 5 carbon atoms", and R' represents the above-mentioned "aryl group having 6 to 10 carbon atoms"), and there may be mentioned, for example, a benzyl group, a phenethyl group or an α-methylbenzyl group, etc. The aryl portion of the "aralkyl group having 7 to 15 carbon atoms" may be substituted by one or more of the above-mentioned "linear or branched alkyl group having 1 to 5 carbon atoms which may be substituted by a halogen atom(s)."

In the present invention, the "aryloxyalkyl group having 7 to 15 carbon atoms" means a group -R-O-R' (here, R represents the above-mentioned alkylene group having 1 to 5 carbon atoms", and R' represents the above-mentioned "aryl group having 6 to 10 carbon atoms"), and there may be mentioned, for example, a phenoxymethyl group, a phenoxyethyl group or a phenoxypropyl group, etc. The aryl portion of the "aryloxyalkyl group having 7 to 15 carbon atoms" may be substituted by one or more of the above-mentioned "linear or branched alkyl group having 1 to 5 carbon atoms which may be substituted by a halogen atom(s)."

In the present invention, the "alkali metal" means an alkali metal, and may be mentioned, for example, lithium, sodium, potassium or cesium, etc.

In the present invention, "a halide ion" means a fluoride ion, a chloride ion, a bromide ion or an iodide ion.

In the present invention, "an inorganic acid ion" means a carbonate ion, a sulfate ion, a phosphate ion, a hydrogen phosphate ion, a dihydrogen phosphate ion, a nitrate ion, a perchlorate ion or a borate ion.

As the above-mentioned An⁻, preferred are a halide ion, a sulfate ion, a phosphate ion, a hydroxide ion and an isothiocyanate ion, and particularly preferred is a halide ion.

In the present invention, the (meth)acrylate compound means both of an acrylate compound and a methacrylate compound. For example, the (meth)acrylic acid means acrylic acid and methacrylic acid.

In the present invention, the biological substance may be mentioned a protein, a saccharide, a nucleic acid and a cell or a combination thereof. The protein may be mentioned, for example, fibrinogen, bovine serum albumin (BSA), human albumin, various kinds of globulins, β-lipoprotein, various kinds of antibodies (IgG, IgA, IgM), peroxidase, various kinds of complements, various kinds of lectins, fibronectin, lysozyme, von Willebrand factor (vWF), serum γ-globulin, pepsin, ovalbumin, insulin, histone, ribonuclease, collagen and cytochrome c, the saccharide may be mentioned, for example, glucose, galactose, mannose, fructose, heparin and hyaluronic acid, the nucleic acid may be mentioned, for example, deoxyribonucleic acid (DNA) and ribonucleic acid (RNA), the cell may be mentioned, for example, fibroblast, bone marrow cells, B lymphocytes, T lymphocytes, neutrophils, red blood cells, platelets, macrophages, monocytes, bone cells, bone marrow cells, pericytes, dendritic cells, keratinocytes, fat cells, mesenchymal cells, epithelial cells, epidermal cells, endothelial cells, vascular endothelial cells, hepatic parenchymal cells, cartilage cells, cumulus cells, neural cells, glial cells, neurons, oligodendrocytes, microglia, astroglial cells, heart cells, esophagus cells, muscle cells (for example, smooth muscle cells or skeletal muscle cells), pancreatic beta cells, melanocytes, hematopoietic precursor cells, mononuclear cells, embryonic stem cells (ES cell), embryonic tumor cells, embryonic germline stem cells, induced pluripotent stem cells (iPS cell), neural stem cells, hematopoietic stem cells, mesenchymal stem cells, liver stem cells, pancreatic stem cells, muscle stem cells, germline stem cells, intestinal stem cells, cancer stem cells, hair follicle stem cells, and various kinds of cell lines (for example, HCT116, Huh7, HEK293 (human embryonic kidney cell), HeLa (human cervical cancer cell lines), HepG2 (human liver cancer cell lines), UT7/TPO (human leukemia cell lines), CHO (Chinese hamster ovary cell lines), MDCK, MDBK, BHK, C-33A, HT-29, AE-1, 3D9, Ns0/1, Jurkat, NIH3T3, PC12, S2, Sf9, Sf21, High Five, Vero), etc., and the coating film of the present invention has a high function of inhibiting adhesion particularly to platelets. The coating film of the present invention has a high function of inhibiting adhesion particularly against a serum in which a protein or a saccharide is mixed. The coating film of the present invention has a particularly high function of inhibiting adhesion to embryonic fibroblasts.

The terms that a function of inhibiting adhesion of a biological substance mean, for example, in the QCM-D measurement carried out by the method described in Test example 1, a mass (%) per a relative unit area compared to that of no coating film (((a mass (ng/cm²) per a unit area of Example)/(a mass (ng/cm²) per a unit area of Comparative example))×100) is 50% or less, preferably 30% or less, and more preferably 20% or less.

### <<Explanation of the present invention>>

The coating film of the present invention is obtainable by a method which comprises a process of coating a composition for forming a coating film which contains (i) a copolymer containing a recurring unit containing an organic group of the following formula (a) and a recurring unit containing an organic group of the following formula (b): 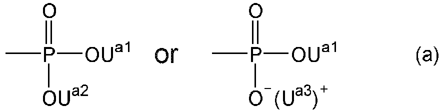 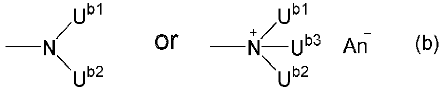 [wherein U^{a1} represents an aryl group having 6 to 10 carbon atoms or a linear or branched alkyl group having 1 to 5 carbon atoms, U^{a2} represents a hydrogen atom, U^{a3} represents an alkali metal; U^{b1}, U^{b2} and U^{b3} each independently represent a hydrogen atom or a linear or branched alkyl group having 1 to 5 carbon atoms; An⁻ represents an anion selected from the group consisting of a halide ion, an inorganic acid ion, a hydroxide ion and an isothiocyanate ion], and (ii) a solvent, onto a substrate.

Also, the copolymer according to the coating film of the present invention may further contain a recurring unit containing an organic group of the following formula (c):

-R^{c} (c)

[wherein R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].

The copolymer according to the coating film of the present invention is not particularly limited as long as it is a copolymer containing the recurring unit which contains an organic group of the above-mentioned formula (a), the recurring unit which contains an organic group of the above-mentioned formula (b) and, if necessary, the recurring unit which contains an organic group of the above-mentioned formula (c). In the present invention, the recurring unit which contains the organic group of the above-mentioned formula (c) is different from the recurring unit which contains the organic group of the above-mentioned formula (a) and the recurring unit which contains the organic group of the above-mentioned formula (b). The polymer is desirably a material obtained by subjecting a monomer containing the organic group of the above-mentioned formula (a), a monomer containing the organic group of the above-mentioned formula (b) and, if necessary, a monomer containing the organic group of the above-mentioned formula (c) to radical polymerization, and a material obtained by subjecting to polycondensation or polyaddition reaction may be also used. Examples of the copolymer may be mentioned a vinyl polymerized polymer in which an olefin(s) is/are reacted, a polyamide, a polyester, a polycarbonate, a polyurethane, etc., and among these, a vinyl polymerized polymer in which an olefin(s) is/are reacted or a (meth)acrylic polymer in which a (meth)acrylate compound(s) is/are polymerized is particularly desired.

A ratio of the recurring unit containing an organic group of the formula (a) in the copolymer according to the coating film of the present invention is 3 mol% to 80 mol%. Incidentally, the copolymer according to the present invention may contain two or more kinds of the recurring units containing an organic group of the formula (a).

A ratio of the recurring unit containing an organic group of the formula (b) in the copolymer according to the coating film of the present invention is 3 mol% to 80 mol%. Incidentally, the copolymer according to the present invention may contain two or more kinds of the recurring units containing an organic group of the formula (b).

A ratio of the recurring unit containing an organic group of the formula (c) in the copolymer according to the coating film of the present invention may be the remainder subtracting the ratios of the above-mentioned formulae (a) and (b) from the whole of the copolymer, and, for example, it is 0 mol% to 90 mol%. Incidentally, the copolymer according to the present invention may contain two or more kinds of the recurring units containing an organic group of the formula (c).

The solvent to be contained in the composition for forming a coating film of the present invention may be mentioned water, a phosphate buffered physiological saline (PBS) and an alcohol. The alcohol may be mentioned an alcohol having 2 to 6 carbon atoms, for example, ethanol, propanol, isopropanol, 1-butanol, 2-butanol, isobutanol, t-butanol, 1-pentanol, 2-pentanol, 3-pentanol, 1-heptanol, 2-heptanol, 2,2-dimethyl-1-propanol (=neopentyl alcohol), 2-methyl-1-propanol, 2-methyl-1-butanol, 2-methyl-2-butanol (=t-amyl alcohol), 3-methyl-1-butanol, 3-methyl-3-pentanol, cyclopentanol, 1-hexanol, 2-hexanol, 3-hexanol, 2,3-dimethyl-2-butanol, 3,3-dimethyl-1-butanol, 3,3-dimethyl-2-butanol, 2-ethyl-1-butanol, 2-methyl-1-pentanol, 2-methyl-2-pentanol, 2-methyl-3-pentanol, 3-methyl-1-pentanol, 3-methyl-2-pentanol, 3-methyl-3-pentanol, 4-methyl-1-pentanol, 4-methyl-2-pentanol, 4-methyl-3-pentanol and cyclohexanol, which may be used singly or a mixed solvent of these in combination, and in the viewpoint of dissolution of the copolymer, it is preferably selected from water, PBS, ethanol, propanol and a mixed solvent thereof, more preferably selected from water, ethanol and a mixed solvent thereof.

A concentration of the solid component in the composition for forming a coating film according to the present invention is desirably 0.01 to 50% by mass to form a coating film uniformly. Also, the concentration of the copolymer in the composition for forming a coating film is preferably 0.01 to 4% by mass, more preferably 0.01 to 3% by mass, particularly preferably 0.01 to 2% by mass, further preferably 0.01 to 1% by mass. If the concentration of the copolymer is 0.01% by mass or less, the concentration of the copolymer of the obtainable composition for forming a coating film is too low so that a coating film having a sufficient film thickness cannot be formed, while if it is 4% by mass or more, storage stability of the composition for forming a coating film is poor, and there is a possibility of causing deposition of the dissolved material or gelation thereof.

Further, to the composition for forming a coating film of the present invention may be added other substances within the range which does not impair the performance of the obtainable coating film depending on the necessity, in addition to the above-mentioned copolymer and the solvent. The other substances may be mentioned an antiseptic, a surfactant, a primer which heightens adhesiveness with the substrate, an antifungal agent and a saccharide, etc.

To control ion balance of the copolymer in the composition for forming a coating film according to the present invention, when the coating film of the present invention is to be obtained, a process of previously adjusting a pH of the composition for forming a coating film may be further contained. The pH adjustment may be carried out, for example, by adding a pH adjusting agent to the composition containing the above-mentioned copolymer and a solvent, to make the pH of the composition 3.5 to 8.5, more preferably 4.0 to 8.0. A kind of the pH adjusting agent which can be used and an amount thereof are optionally selected depending on the concentration of the above-mentioned copolymer, and an existing ratio of the anion and the cation, etc.

Examples of the pH adjusting agent may be mentioned an organic amine such as ammonia, diethanolamine, pyridine, N-methyl-D-glucamine, tris(hydroxymethyl)-aminomethane, etc.; an alkali metal hydroxide such as potassium hydroxide, sodium hydroxide, etc.; an alkali metal halide such as potassium chloride, sodium chloride, etc.; an inorganic acid such as sulfuric acid, phosphoric acid, hydrochloric acid, carbonic acid, etc., or an alkali metal salt thereof; a quaternary ammonium cation such as choline, etc., or a mixture thereof (for example, a buffer such as a phosphate buffered physiological saline, etc.). Among these, ammonia, diethanolamine, sodium hydroxide, choline, N-methyl-D-glucamine and tris(hydroxymethyl)aminomethane are preferred, and ammonia, diethanolamine, sodium hydroxide and choline are particularly preferred.

Accordingly, the present invention relates to the composition for forming a coating film which comprises (i) the copolymer containing the recurring unit which contains an organic group of the above-mentioned formula (a), the recurring unit which contains an organic group of the above-mentioned formula (b) and, if necessary, the recurring unit which contains an organic group of the above-mentioned formula (c), (ii) the solvent, and, if necessary, (iii) the pH adjusting agent. Specific examples of the copolymer, the solvent and the pH adjusting agent are as mentioned above.

The composition for forming a coating film according to the present invention is coated onto a substrate and dried to form a coating film.

The substrate for forming the coating film of the present invention may be mentioned glass, metal, a metal containing compound or a semi-metal containing compound, activated charcoal or a resin. The metal may be mentioned a typical metal: (an alkali metal: Li, Na, K, Rb, Cs; an alkaline earth metal: Ca, Sr, Ba, Ra), a magnesium group element: Be, Mg, Zn, Cd, Hg; an aluminum group element: Al, Ga, In; a rare earth element: Y, La, Ce, Pr, Nd, Sm, Eu; a tin group element: Ti, Zr, Sn, Hf, Pb, Th; an iron group element: Fe, Co, Ni; a vanadium group element: V, Nb, Ta, a chromium group element: Cr, Mo, W, U; a manganese group element: Mn, Re; a noble metal: Cu, Ag, Au; a platinum group element: Ru, Rh, Pd, Os, Ir, Pt, etc. The metal containing compound or the semi-metal containing compound may be mentioned, for example, ceramics comprising a metal oxide as a basic component, which are a sintered body baked by a heat treatment at a high temperature, a semiconductor such as silicon, an inorganic solid material including a molded product of an inorganic compound such as a metal oxide or a semi-metal oxide (silicon oxide, alumina, etc.), a metal carbide or a semi-metal carbide, a metal nitride or a semi-metal nitride (silicon nitride, etc.), a metal boride or a semi-metal boride, etc., aluminum, nickel-titanium and stainless (SUS304, SUS316, SUS316L, etc.).

The resin may be either a natural resin or a derivative thereof, or a synthetic resin, and the natural resin preferably used may be mentioned cellulose, cellulose triacetate (CTA), nitrocellulose (NC), cellulose to which dextran sulfate has been fixed, etc., while the synthetic resin preferably used may be mentioned polyacrylonitrile (PAN), polyester-based polymer alloy (PEPA), polystyrene (PS), polysulfone (PSF), polyethylene terephthalate (PET), polymethyl methacrylate (PMMA), polyvinyl alcohol (PVA), polyurethane (PU), ethylene vinyl alcohol (EVAL), polyethylene (PE), polyester (PE), polypropylene (PP), polyvinylidene fluoride (PVDF), various kinds of ion exchange resins or polyether sulfone (PES), etc. The coating film of the present invention can be formed by a low temperature drying, so that it can be applied to a resin having low heat resistance, etc.

For forming the coating film of the present invention, the above-mentioned composition for forming a coating film is coated onto at least a part of the surface of the substrate. The coating method is not particularly limited, and a usual coating method such as spin coating, dip coating, a solvent casting method, etc., may be used.

The drying process of the coating film according to the present invention is carried out under the atmosphere or under vacuum at a temperature within the range of -200°C to 200°C. According to the drying process, the solvent in the above-mentioned composition for forming a coating film is removed, and the units of the formula (a) and the formula (b) of the copolymer according to the present invention form ionic bonding to completely fix to the substrate.

The coating film may be formed by, for example, the drying at room temperature (10°C to 35°C, for example, 25°C), and for forming the coating film more rapidly, it may be dried at, for example, 40°C to 50°C. In addition, a drying process at a very low temperature to low temperature (-200°C to around -30°C) by a freeze drying method may be used. Freeze drying is called as freeze vacuum drying, and is a method of removing a solvent under a vacuum state by sublimation by generally cooling a material to be dried with a coolant. A general coolant to be used in the freeze drying may be mentioned a mixed medium of dry ice and methanol (-78°C), liquid nitrogen (-196°C), etc.

If the drying temperature is -200°C or lower, a coolant which is not in general must be used so that it lacks in versatility, and it takes a long time for drying due to sublimation of the solvent so that the efficiency is bad. If the drying temperature is 200°C or higher, ionic bonding reaction at the surface of the coating film excessively proceeds and the surface loses a hydrophilic property, whereby a function of inhibiting adhesion of a biological substance cannot be exhibited. More preferred drying temperature is 10°C to 180°C, and more preferred drying temperature is 25°C to 150°C.

After the drying, to remove impurities, unreacted monomers, etc., remained on the coating film, and further to adjust ion balance of the copolymer in the film, it may be carried out a process of washing with at least one solvent selected from the group consisting of water and an aqueous solution containing an electrolyte(s). Washing is desirably washing with flowing water or washing with ultrasonic wave, etc. The above-mentioned water and the aqueous solution containing an electrolyte(s) may be a material heated, for example, within the range of 40°C to 95°C. The aqueous solution containing an electrolyte(s) is preferably PBS, a physiological saline (a material containing sodium chloride alone), a Dulbecco's phosphate buffered physiological saline, a Tris buffered physiological saline, a HEPES buffered physiological saline and a Veronal buffered physiological saline, and PBS is particularly preferred. After fixation, even when the coating film is washed with water, PBS and an alcohol, etc., it does not elute and is still firmly fixed to the substrate. Even when a biological substance is attached to the formed coating film, it can be easily removed thereafter by washing with water, etc., and the surface of the substrate onto which the coating film of the present invention has been formed has a function of inhibiting adhesion of a biological substance.

Examples of the application of the coating film according to the present invention may be mentioned, for example, a coating film for a filter of an artificial dialyzer, and the coating film of the present invention has good fixing property to the synthetic resin (for example, PES, PS, PSF and NC, etc.) used as a filter, and has good durability after fixation. A form of the substrate is not particularly limited, and may be mentioned a substrate board, fiber, particles, a gel form, a porous form, etc., and a shape of which may be a flat plate or a curved surface. In the case of the particles, the particle size may be, for example, 5 to 1,000 nm.

In particular, in the case of the particles, it may be colloid in which the particles are dispersed in a solvent (foam, emulsion (latex), suspension (suspended liquid), etc.; for example, selenium colloid), etc.

For example, when a coating film for a filter of an artificial dialyzer is to be manufactured, a liquid of the composition for forming a coating film according to the present invention is flown through the inside of the filter prepared by the above-mentioned raw material, for example, having a hollow fiber shape with a diameter of 0.1 to 500 µm, thereafter, subjecting to a drying process and a washing process (hot water (for example, 40°C to 95°C) washing, etc.) to manufacture the film.

If necessary, there is a case where a treatment with γ ray, ethylene oxide, an autoclave, etc., is carried out for sterilization.

A film thickness of the coating film of the present invention is preferably 10 to 1,000Å, more preferably 10 to 500Å, and most preferably 10 to 300Å.

The coating film of the present invention has a function of inhibiting adhesion of a biological substance, so that it can be suitably used as a coating film for a medical substrate. It can be suitably used as, for example, a leukocyte-removing filter, a blood transfusion filter, a virus-removing filter, a micro blood clots-removing filter, a module for blood purification, an artificial heart, an artificial lung, a blood circuit, an artificial blood vessel, a blood vessel bypass tube, a medical tube, an artificial valve, a cannula, a stent, a catheter, a catheter in blood vessel, a balloon catheter, a guide wire, a suture, an indwelling needle, shunt, an artificial joint, an artificial hip joint, a blood bag, a blood reservoir, auxiliary instruments for operation, an adhesion preventing film, a wound covering material, etc. Here, the module for blood purification means a module having a function of removing wastes or a toxic substance in blood by circulating blood outside the body, and may be mentioned an artificial kidney, a toxin adsorption filter or column, etc.

Also, the coating film of the present invention is useful as a coating film of a cell culture vessel such as a flask, a dish, a plate, etc., or various kinds of equipment for research in which attachment of a protein is suppressed.

Further, the coating film of the present invention is also useful as a material for cosmetics, a material for a contact lens care article, a fiber finishing agent for skin care, a material for a diagnostic agent for biochemical research, a blocking agent for suppressing non-specific adsorption in an enzyme-linked immunosorbent assay (ELISA) method, a latex aggregation method or an immunochromatography method which has widely been used in the clinical diagnosis, a stabilizer for stabilizing a protein such as an enzyme and an antibody, etc.

Moreover, the coating film of the present invention is also useful as a coating film for toiletry, a personally care product, a detergent, a pharmaceutical product, a quasi-drug, fiber and an antifouling material.

The copolymer contained in the composition for forming a coating film according to the present invention particularly preferably used is a copolymer containing the recurring units of the following formulae (a1) and (b1). 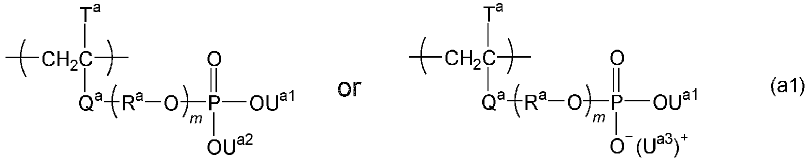 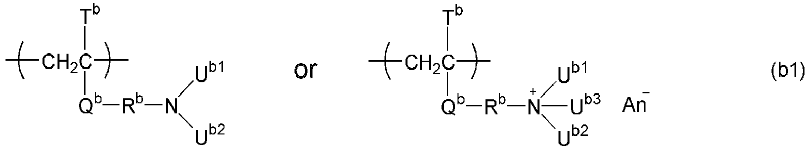 wherein T^{a} and T^{b} each independently represent a hydrogen atom or a linear or branched alkyl group having 1 to 5 carbon atoms, Q^{a} and Q^{b} each independently represent a single bond, an ester bond or an amide bond, R^{a} and R^{b} each independently represent a linear or branched alkylene group having 1 to 10 carbon atoms which may be substituted by a halogen atom(s), U^{a1} represents an aryl group having 6 to 10 carbon atoms or a linear or branched alkyl group having 1 to 5 carbon atoms, U^{a2} represents a hydrogen atom, U^{a3} represents an alkali metal, U^{b1}, U^{b2} and U^{b3} each independently represent a hydrogen atom or a linear or branched alkyl group having 1 to 5 carbon atoms, An⁻ represents an anion selected from the group consisting of a halide ion, an inorganic acid ion, a hydroxide ion and an isothiocyanate ion, m represents an integer of 0 to 6.

The copolymer contained in the composition for forming a coating film of the present invention may further contain a recurring unit of the following formula (c1): 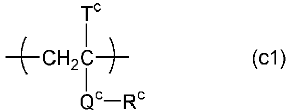 wherein T^{c} each independently represent a hydrogen atom or a linear or branched alkyl group having 1 to 5 carbon atoms, Q^{c} represents a single bond, an ether bond or an ester bond, R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s)).

In the formula (a1), m is an integer of 0 to 6, preferably an integer of 1 to 6, more preferably an integer of 1 to 5, and particularly preferably 1.

A ratio of the recurring unit of the formula (a1) contained in the copolymer according to the present invention is 3 mol% to 80 mol%. Incidentally, the copolymer according to the present invention may contain two or more kinds of the recurring units of the formula (a1).

A ratio of the recurring unit of the formula (b1) contained in the copolymer according to the present invention is 3 mol% to 80 mol%. Incidentally, the copolymer according to the present invention may contain two or more kinds of the recurring units of the formula (b1).

A ratio of the recurring unit of the formula (c1) contained in the copolymer according to the present invention may be the remainder subtracting the ratio of the above-mentioned formula (a1) and the formula (b1) from the whole of the copolymer, and is, for example, 0 mol% to 90 mol%. Incidentally, the copolymer according to the present invention may contain two or more kinds of the recurring units of the formula (c1).

The present invention also relates to a copolymer obtainable by reacting (polymerizing) a monomer mixture containing compounds of the following formulae (A) and (B): 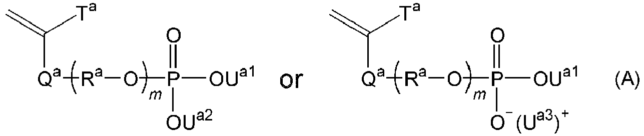 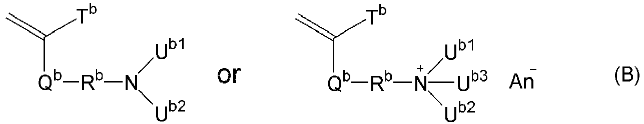 [wherein
T^{a} and T^{b} each independently represent a hydrogen atom or a linear or branched alkyl group having 1 to 5 carbon atoms;
Q^{a} and Q^{b} each independently represent a single bond, an ester bond or an amide bond;
R^{a} and R^{b} each independently represent a linear or branched alkylene group having 1 to 10 carbon atoms which may be substituted by a halogen atom(s);
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms;
An⁻ represents an anion selected from the group consisting of a halide ion, an inorganic acid ion, a hydroxide ion and an isothiocyanate ion;
m represents an integer of 0 to 6]
in a solvent.

The copolymer of the present invention may be a copolymer obtainable from a monomer mixture further containing a compound of the following formula (C): 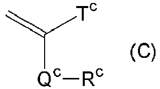 [wherein
T^{c} each independently represents a hydrogen atom or a linear or branched alkyl group having 1 to 5 carbon atoms;
Q^{c} represents a single bond, an ether bond or an ester bond; and
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms (here, the above-mentioned aryl portion may be substituted by a linear or branched alkyl group having 1 to 5 carbon atoms which may be substituted by a halogen atom(s))].

In the present invention, T^{a}, T^{b} and T^{c} are each preferably a hydrogen atom, a methyl group or an ethyl group, more preferably a hydrogen atom or a methyl group. Q^{a}, Q^{b} and Q^{c} are each preferably a single bond or an ester bond, and more preferably an ester bond. R^{a} and R^{b} are each preferably a linear or branched alkylene group having 1 to 5 carbon atoms, and more preferably a methylene group, an ethylene group or a propylene group. R^{c} is preferably a linear or branched alkyl group having 4 to 18 carbon atoms or a cycloalkyl group having 3 to 10 carbon atoms, and more preferably a butyl group, a pentyl group, a hexyl group or an isomer thereof, or a cyclohexyl group. U^{a1} is preferably a phenyl group, a methyl group, an ethyl group, an n-propyl group, an isopropyl group, an n-butyl group, an isobutyl group, an s-butyl group or a t-butyl group, more preferably a phenyl group, a methyl group, an ethyl group, n-propyl group or an n-butyl group, further preferably a phenyl group, a methyl group or an ethyl group, and most preferably a phenyl group, U^{a2} is preferably a hydrogen atom, U^{a3} is preferably a sodium ion or a potassium ion, and U^{b1}, U^{b2} and U^{b3} are each preferably a hydrogen atom, a methyl group, an ethyl group or a t-butyl group.

Specific examples of the above-mentioned formula (A) may be mentioned phenyl vinylphosphonate, 2-(meth)acryloyloxyethyl phenyl hydrogen phosphate or an alkali metal salt thereof, 2-(meth)acryloyloxyethyl methyl hydrogen phosphate or an alkali metal salt thereof, 2-(meth)acryloyloxyethyl ethyl hydrogen phosphate or an alkali metal salt thereof, etc., and among these, 2-(meth)acryloyloxyethyl phenyl hydrogen phosphate or an alkali metal salt thereof is preferably used.

The structural formula of 2-methacryloyloxyethyl phenyl hydrogen phosphate is shown by the following formula.

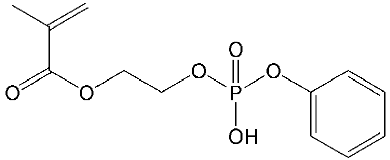

For example, 2-methacryloyloxyethyl phenyl hydrogen phosphate can be prepared, for example, by the method described in Polymer Degradation and Stability 91 (2006) 2683-2690.

Specific examples of the above-mentioned formula (B) may be mentioned dimethylaminoethyl (meth)acrylate, diethylaminoethyl (meth)acrylate, dimethylaminopropyl (meth)acrylate, 2-(t-butylamino)ethyl (meth)acrylate, methacryloyl choline chloride, etc., and among these, dimethylaminoethyl (meth)acrylate, methacryloyl choline chloride or 2-(t-butylamino)ethyl (meth)acrylate is preferably used.

The structural formulae of dimethylaminoethyl acrylate (=acrylic acid 2-(dimethylamino)ethyl), diethylaminoethyl methacrylate (=methacrylic acid 2-(diethylamino)ethyl), dimethylaminoethyl methacrylate (=methacrylic acid 2-(dimethylamino)ethyl), methacryloylcholine chloride and 2-(t-butylamino)ethyl methacrylate (=methacrylic acid 2-(t-butylamino)ethyl) are shown by the following formula (B-1) to the formula (B-5), respectively.

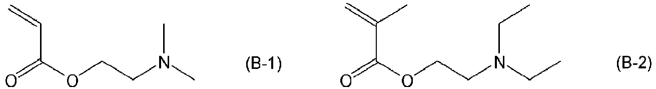

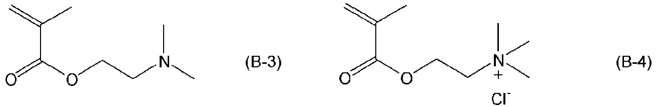

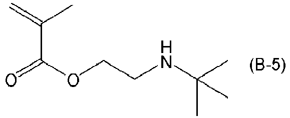

Specific examples of the above-mentioned formula (C) may be mentioned a linear or branched alkyl ester of (meth)acrylic acid such as butyl (meth)acrylate, 2-ethylhexyl (meth)acrylate, lauryl (meth)acrylate, stearyl (meth)acrylate, etc.; a cyclic alkyl ester of (meth)acrylic acid such as cyclohexyl (meth)acrylate, isobornyl (meth)acrylate, etc.; an aralkyl ester of (meth)acrylic acid such as benzyl (meth)acrylate, phenethyl (meth)acrylate, etc.; a styrene-based monomer such as styrene, methylstyrene, chloromethylstyrene, etc.; a vinyl ether-based monomer such as methyl vinyl ether, butyl vinyl ether, etc.; a vinyl ester-based monomer such as vinyl acetate, vinyl propionate, etc. Among these, butyl (meth)acrylate or cyclohexyl (meth)acrylate is preferably used.

The structural formulae of butyl methacrylate (=methacrylic acid butyl) and cyclohexyl methacrylate (=methacrylic acid cyclohexyl) are shown by the following formula (C-1) and the formula (C-2), respectively.

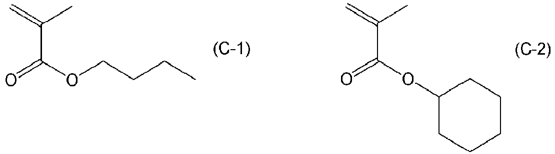

A ratio of the compound of the formula (A) based on the whole monomers forming the above-mentioned copolymer is 3 mol% to 80 mol%. In addition, the compound of the formula (A) may be two or more kinds.

A ratio of the compound of the formula (B) based on the whole monomers forming the above-mentioned copolymer is 3 mol% to 80 mol%. In addition, the compound of the formula (B) may be two or more kinds.

A ratio of the compound of the formula (C) based on the whole monomers forming the above-mentioned copolymer may be the remainder subtracting the ratio of the above-mentioned formulae (A) and (B) from the whole of the copolymer, and is, for example, 0 mol% to 90 mol%. In addition, the compound of the formula (C) may be two or more kinds.

As the synthetic method of the copolymer according to the present invention, there may be mentioned the methods of the radical polymerization, the anion polymerization, the cation polymerization, etc., which are general synthetic methods of an acrylic polymer or a methacrylic polymer, etc., whereby a copolymer can be synthesized. As the reaction form thereof, various methods such as the solution polymerization, the suspension polymerization, the emulsion polymerization, the bulk polymerization, etc., may be employed.

The composition for forming a coating film according to the present invention may be prepared by diluting a desired copolymer with a desired solvent to a predetermined concentration.

Further, the composition for forming a coating film according to the present invention may be prepared from the varnish containing the copolymer of the present invention. The varnish containing the copolymer of the present invention can be prepared by the manufacturing method containing a process of reacting (polymerizing) the compounds of the above-mentioned formulae (A) and (B), and, if necessary, (C), in a solvent with a total concentration of the both compounds of 0.01% by mass to 20% by mass.

The solvent to be used in the polymerization reaction may be water, a phosphate buffered solution or an alcohol such as ethanol, etc., or a mixed solvent in which these solvents are used in combination, and desirably contains water or ethanol. It is preferred to contain water or ethanol in an amount of 10% by mass or more and 100% by mass or less in the solvent in the polymerization reaction. It is more preferred to contain water or ethanol in an amount of 50% by mass or more and 100% by mass or less. It is further preferred to contain water or ethanol in an amount of 80% by mass or more and 100% by mass or less. It is particularly preferred to contain water or ethanol in an amount of 90% by mass or more and 100% by mass or less. It is most preferred that a total amount of water and ethanol is 100% by mass.

As the reaction concentration, for example, the concentration of the compounds of the above-mentioned formula (A) or the formula (B) in the reaction solvent is 0.01% by mass or more, and, for example, it can be made 1% by mass to 50% by mass, more preferably it can be made 2% by mass to 40% by mass, further preferably it can be made 3% by mass to 30% by mass, and most preferably it can be made 4% by mass to 25% by mass.

Also, in the synthesis of the copolymer according to the present invention, for example, after preparing an acidic phosphoric acid ester monomer (half salt) of the formula (1), it may be polymerized with a compound of the formula (C) to prepare the copolymer, if necessary.

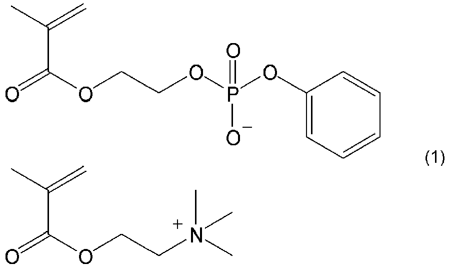

The phosphate group-containing monomer is a monomer easily associated, so that it may be added dropwise to the reaction solvent little by little so as to rapidly disperse therein when it is added dropwise to the reaction system.

Moreover, the reaction solvent may be heated (for example, 40°C to 100°C) to increase the solubility of the monomer and the polymer.

To proceed the polymerization reaction efficiently, a polymerization initiator is desirably used. Examples of the polymerization initiator to be used may be mentioned 2,2'-azobis(isobutyronitrile), 2,2'-azobis(2-methylbutyronitrile), 2,2'-azobis(2,4-dimethylvaleronitrile) (product name; V-065, available from Wako Pure Chemical Industries, Ltd., 10 hour half-life temperature; 51°C), 2,2' -azobis(4-methoxy-2,4-dimethylvaleronitrile), 1,1'-azobis(cyclohexane-1-carbonitrile), 1-[(1-cyano-1-methylethyl)azo]formamide, 2,2'-azobis[2-(2-imidazolin-2-yl)propane] dihydrochloride (product name; VA-044, available from Wako Pure Chemical Industries, Ltd., 10 hour half-life temperature; 44°C), 2,2'-azobis[2-(2-imidazolin-2-yl)propane] (product name; VA-061, available from Wako Pure Chemical Industries, Ltd., 10 hour half-life temperature; 61°C), 2,2'-azobis(2-methylpropionamidine) dihydrochloride (product name; VA-50, available from Wako Pure Chemical Industries, Ltd., 10 hour half-life temperature; 56°C), 2,2'-azo(2-methyl-N-(2-hydroxyethyl)propionamide (product name; VA-086, available from Wako Pure Chemical Industries, Ltd., 10 hour half-life temperature; 86°C), benzoyl peroxide (BPO), 2,2'-azobis(N-(2-carboxyethyl)-2-methylpropionamidine) n-hydrate (product name; VA-057, available from Wako Pure Chemical Industries, Ltd., 10 hour half-life temperature; 57°C), 4,4'-azobis(4-cyanopentanoic acid) (product name; VA-501, available from Wako Pure Chemical Industries, Ltd.), 2,2'-azobis[2-(2-imidazolin-2-yl)propane] disulfate dihydrate (product name; VA-046B, available from Wako Pure Chemical Industries, Ltd., 10 hour half-life temperature; 46°C), peroxodisulfuric acid or t-butyl hydroperoxide, etc.

When a solubility in water, ion balance and an interaction with the monomers are taking into consideration, it is preferably selected from 2,2'-azo(2-methyl-N-(2-hydroxyethyl)propionamide, 2,2'-azobis(N-(2-carboxyethyl)-2-methylpropionamidine) n-hydrate, 4,4'-azobis(4-cyanopentanoic acid), 2,2'-azobis[2-(2-imidazolin-2-yl)propane] dihydrochloride, 2,2'-azobis[2-(2-imidazolin-2-yl)propane] disulfate dihydrate, 2,2'-azobis[2-(2-imidazolin-2-yl)propane], 2,2'-azobis(2-methylpropionamidine) dihydrochloride and peroxodisulfuric acid.

When a solubility in an organic solvent, ion balance and an interaction with the monomers are taking into consideration, it is desired to use 2,2'-azobis(2,4-dimethylvaleronitrile) or 2,2'-azobis(isobutyronitrile).

An amount of the polymerization initiator to be added is 0.05% by mass to 10% by mass based on the total weight of the monomers to be used for the polymerization.

As the reaction conditions, the polymerization reaction proceeds by heating a reaction vessel by an oil bath, etc., at 50°C to 200°C and stirring for one hour to 48 hours, more preferably at 80°C to 150°C for 5 hours to 30 hours to obtain the copolymer of the present invention. The reaction atmosphere is preferably a nitrogen atmosphere.

As the reaction procedure, the whole reaction substances are charged in the reaction solvent at the room temperature, and then, the polymerization may be carried out by heating to the above-mentioned temperature, or whole or a part of the mixture of the reaction substances may be added dropwise to the previously heated solvent little by little.

According to the latter reaction procedure, the varnish containing the copolymer of the present invention can be prepared by the manufacturing method comprising a process of adding dropwise a mixture containing the compounds of the above-mentioned formulae (A) and (B), and, if necessary, (C), a solvent and a polymerization initiator to the solvent maintained at a temperature higher than the 10-hr half-life temperature of the polymerization initiator, and reacting (polymerizing) the compounds.

A weight molecular weight of the copolymer according to the present invention may be several thousand to several million or so, preferably 5,000 to 5,000,000. It is more preferably 10,000 to 2,000,000. Also, it may be either of a random copolymer, a block copolymer or a graft copolymer, there is no specific limitation in the copolymerization reaction itself for producing the copolymer, and a conventionally known method synthesized in a solution such as radical polymerization, ion polymerization, photopolymerization, or polymerization utilizing macromer or emulsion polymerization can be used. Depending on the purposes thereof to be used, any one of the copolymers of the present invention may be solely used, or a plural kinds of the copolymers may be used by mixing while optionally changing the ratios thereof.

### EXAMPLES

In the following, the present invention is explained further in detail by referring to Synthetic examples and Examples, but the present invention is not limited by these.

### <Measurement method of weight average molecular weight>

A weight average molecular weight shown in the following Synthetic example is a measurement result by Gel Filtration Chromatography (hereinafter abbreviated to as GFC). The measurement conditions, etc., are as follows.

### (Measurement conditions)

- Device: Prominence (manufactured by Shimadzu Corporation)
- GFC column: OHpak SB-804 HQ (8.0 mm ID×300 mL)
- Flow rate: 0.5 ml/min
- Eluent: Ionic aqueous solution and an ethanol-mixed aqueous solution
- Column temperature: 40°C
- Detector: RI
- Injection concentration: Polymer solid content 0.1% by mass
- Injection amount: 100 µL
- Calibration curve: Cubic approximate curve
- Standard sample: Polyethylene oxide (available from Agilent Technologies Japan, Ltd.)×10 kinds

### <Synthetic example 1>

Under nitrogen atmosphere, in a 1L four-necked flask were charged 60.01 g (0.28 mol) of phenyl dichlorophosphate (available from Tokyo Chemical Industry Co., Ltd.), 204.02 g of tetrahydrofuran and 60.43 g (0.60 mol) of triethylamine, and the mixture was cooled to 0°C and stirred for 30 minutes. A solution in which 37.02 g (0.28 mol) of 2-hydroxyethyl methacrylate (available from Aldrich Corporation) had been dissolved in 51.00 g of tetrahydrofuran was added dropwise to the mixture at 0°C over one hour, and stirred at 0°C for further 4 hours. A mixed solution of 5.12 g of ultrapure water and 51.00 g of tetrahydrofuran was added dropwise to the mixture at 0°C over one hour, and stirred at 0°C for further 4 hours. Thereafter, the temperature of the mixture was raised to 25°C, and the mixture was stirred at 25°C for further 19 hours. The reaction mixture was filtered through a membrane filter made of PTFE, a cake was washed with 20.00 g of tetrahydrofuran, and the solvent in the filtrate was removed under reduced pressure to obtain a condensed liquid. In the other 300 ml of a four-necked flask was charged 75.09 g of 5M aqueous sodium hydroxide solution, and 78.36 g of the condensed liquid was added dropwise thereto at 17 to 23°C to precipitate white crystals. The crystals were filtered, the cake was washed three times with 10.30 g of pure water, and the crystals were dried under reduced pressure. To the dried crystals was added 180.00 g of diethyl ether, the mixture was stirred and filtered through a membrane filter made of PTFE, and the crystals were dried to obtain 32.51 g (yield: 37.1%) of sodium salt of 2-methacryloyloxyethyl phenyl hydrogen phosphate as white powder. Measurement by the liquid chromatography was carried out, and as a result, the purity was 99.3%.
¹H-NMR (400 MHz, DMSO-d₆) 1.84 (s, 3H), 3.95 (t, 2H), 4.18 (t, 2H), 5.65 (s, 1H), 5.98 (s, 1H), 6.94 (t, 1H), 7.13 (d, 2H), 7.20 (t, 2H)

### <Polymerization example 1>

In 10.90 g of pure water was dissolved 2.00 g of the sodium salt of 2-methacryloyloxyethyl phenyl hydrogen phosphate obtained in the above-mentioned Synthetic example 1, and the solution was filtered through 0.2 µm filter. To the aqueous solution were added successively 1.21 g of ethanol, 1.68 g of 80% aqueous solution of methacryloylcholine chloride (available from Tokyo Chemical Industry Co., Ltd.) and 0.02 g of 2,2'-azobis(N-(2-carboxyethyl)-2-methylpropionamidine) n-hydrate (product name; VA-057, available from Wako Pure Chemical Industries, Ltd.) while maintaining at 20°C or lower. The mixed solution containing all of the above-mentioned components which were sufficiently stirred and became homogeneous was introduced into a dropping funnel. On the other hand, in a three-necked flask attached with a condenser were charged 16.02 g of pure water and 1.82 g of ethanol separately, and a temperature of the mixture was raised to a reflux temperature while flowing nitrogen and stirring. While maintaining the state, the dropping funnel into which the above-mentioned mixed solution had been introduced was set to the three-necked flask, and the mixed solution was added dropwise to a boiled liquid of pure water and ethanol over 0.5 hour. After completion of the dropwise addition, the above-mentioned circumstances were maintained for 24 hours. By cooling the mixture after 24 hours, 33.65 g of a colloid state copolymer varnish having a solid content of about 9.90% by mass was obtained.

### <Polymerization example 2>

In 9.86 g of pure water was dissolved 2.00 g of the sodium salt of 2-methacryloyloxyethyl phenyl hydrogen phosphate obtained in the above-mentioned Synthetic example 1, and the solution was filtered through 0.2 µm filter. To the aqueous solution were added successively 9.86 g of ethanol, 1.68 g of 80% aqueous solution of methacryloylcholine chloride (available from Tokyo Chemical Industry Co., Ltd.), 1.84 g of butyl methacrylate (available from Tokyo Chemical Industry Co., Ltd.) and 0.03 g of 2,2'-azobis(2,4-dimethylvaleronitrile) (product name; V-65, available from Wako Pure Chemical Industries, Ltd.) while maintaining at 20°C or lower. The mixed solution containing all of the above-mentioned components which were sufficiently stirred and became homogeneous was introduced into a dropping funnel. On the other hand, in a three-necked flask attached with a condenser were charged 3.86 g of pure water and 23.01 g of ethanol separately, and a temperature of the mixture was raised to a reflux temperature while flowing nitrogen and stirring. While maintaining the state, the dropping funnel into which the above-mentioned mixed solution had been introduced was set to the three-necked flask, and the mixed solution was added dropwise to a boiled liquid of pure water and ethanol over 0.5 hour. After completion of the dropwise addition, the above-mentioned circumstances were maintained for 24 hours. By cooling the mixture after 24 hours, 52.18 g of a copolymer varnish having a solid content of about 9.74% by mass was obtained. A weight average molecular weight of the main peak in the GPC of the obtained varnish was about 4,500.

### <Comparative polymerization example 1>

Into 12.40 g of pure water and 12.40 g of ethanol were dissolved and successively added 6.00 g of acid phosphoxyethyl methacrylate (product name; Phosmer M, available from Uni-Chemical Co., Ltd., purity: 91.8%), 4.12 g of 2-(dimethylamino)ethyl methacrylate (available from Tokyo Chemical Industry Co., Ltd.) and 0.10 g of 2,2'-azo(2-methyl-N-(2-hydroxyethyl)propionamide) (product name;VA-086, available from Wako Pure Chemical Industries, Ltd.) while maintaining at 20°C or lower. The mixed solution containing all of the above-mentioned components which were sufficiently stirred and became homogeneous was introduced into a dropping funnel. On the other hand, in a three-necked flask attached with a condenser were charged 433.94 g of water and 37.20 g of ethanol, and a temperature of the mixture was raised to a reflux temperature while flowing nitrogen and stirring. While maintaining the state, the dropping funnel into which the above-mentioned mixed solution had been introduced was set to the three-necked flask, and the mixed solution was added dropwise to a boiled liquid of pure water and ethanol over 0.5 hour. After completion of the dropwise addition, the above-mentioned circumstances were maintained for 24 hours. By cooling the mixture after 24 hours, 506.05 g of a colloid state copolymer varnish having a solid content of about 1.64% by mass was obtained.

### (Preparation of silicon wafer)

A commercially available silicon wafer for evaluating a semiconductor was used as such.

### <Example 1>

To 1.00 g of the varnish containing the copolymer obtained in the above-mentioned Polymerization example 1 were added 25.51 g of water and 6.49 g of ethanol, and the mixture was thoroughly stirred to prepare a composition for forming a coating film. The obtained composition for forming a coating film was spin coated onto the above-mentioned silicon wafer with 1,500 rpm for 30 sec. Thereafter, the uncured composition for forming a film attached onto the coating film was sufficiently washed with PBS and pure water, and when a film thickness of the coating film on the silicon wafer was confirmed by an optical interference film thickness meter, then, it was 19Å.

### <Example 2>

To 1.00 g of the varnish containing the copolymer obtained in the above-mentioned Polymerization example 2 were added 9.44 g of water and 22.03 g of ethanol, and the mixture was thoroughly stirred to prepare a composition for forming a coating film. The obtained composition for forming a coating film was spin coated onto the above-mentioned silicon wafer with 1,500 rpm for 30 sec. Thereafter, the uncured composition for forming a film attached onto the coating film was sufficiently washed with PBS and pure water, and when a film thickness of the coating film on the silicon wafer was confirmed by an optical interference film thickness meter, then, it was 178Å.

### <Comparative example 1>

To 10.00 g of the varnish containing the copolymer obtained in the above-mentioned Comparative polymerization example 1 were added 2.51 g of water and 3.89 g of ethanol, and the mixture was thoroughly stirred to prepare a composition for forming a coating film. The obtained composition for forming a coating film was spin coated onto the above-mentioned silicon wafer with 1,500 rpm for 30 sec. Thereafter, the uncured composition for forming a film attached onto the coating film was sufficiently washed with PBS and pure water, and when a film thickness of the coating film on the silicon wafer was confirmed by an optical interference film thickness meter, then, it was 75Å.

### (Manufacture of QCM sensor (PS))

An Au-deposited quartz crystal resonator (Q-Sense, QSX304) was washed for 10 minutes by using a UV/ozone washing device (UV253E, manufactured by Filgen, Inc.), and immediately thereafter, it was dipped in a solution in which 0.0772 g of 2-aminoethanethiol (available from Tokyo Chemical Industry Co., Ltd.) had been dissolved in 1,000 ml of ethanol for 24 hours. After the surface of the sensor was washed with ethanol, it was naturally dried, and a varnish in which 1.00 g of polystyrene (available from Aldrich Corporation) had been dissolved in 99.00 g of toluene was spin coated by a spin coater at the film sensor side with 3,500 rpm for 30 sec, and dried at 205°C for 1 min to manufacture a QCM sensor (PS).

### (Manufacture of QCM sensor (NC))

An Au-deposited quartz crystal resonator (Q-Sense, QSX304) was washed for 10 minutes by using a UV/ozone washing device (UV253E, manufactured by Filgen, Inc.), and immediately thereafter, it was dipped in a solution in which 0.0772 g of 2-aminoethanethiol (available from Tokyo Chemical Industry Co., Ltd.) had been dissolved in 1,000 ml of ethanol for 24 hours. After the surface of the sensor was washed with ethanol, it was naturally dried, and a varnish in which 1.00 g of Collodion (5%) (available from Aldrich Corporation) had been dissolved in 4.56 g of propylene glycol monomethyl ether (available from Kowa Hakko Kogyo Co., Ltd.) was spin coated by a spin coater at the film sensor side with 3,500 rpm for 30 sec, and dried at 150°C for 30 sec to manufacture a QCM sensor (NC).

### <Example 3>

### (Manufacture of coating QCM sensor (PS))

The composition for forming a coating film prepared in Example 2 was spin coated onto the above-mentioned QCM sensor (PS) with 3,500 rpm for 30 sec. Thereafter, as a washing process, excessively attached uncured composition for forming a coating film was washed with PBS and ultrapure water each twice to manufacture a coating QCM sensor (PS).

### <Comparative example 1>

### (Manufacture of coating QCM sensor (PS))

In the same manner as in Example 3 except for changing the composition for forming a coating film prepared in Example 2 to the composition for forming a coating film prepared in Comparative example 1, a coating QCM sensor (PS) was obtained.

### <Example 4>

### (Manufacture of coating QCM sensor (NC))

The composition for forming a coating film prepared in Example 1 was spin coated onto the above-mentioned QCM sensor (NC) with 3,500 rpm for 30 sec. Thereafter, as a washing process, excessively attached uncured composition for forming a coating film was washed with PBS and ultrapure water each twice to manufacture a coating QCM sensor (NC).

### <Example 5>

### (Manufacture of coating QCM sensor (NC))

In the same manner as in Example 4 except for changing the composition for forming a coating film prepared in Example 1 to the composition for forming a coating film prepared in Example 2, a coating QCM sensor (NC) was obtained.

### <Test example 1>

### (Attached amount test of biologically originated substance in FBS; QCM-D measurement)

The coating QCM sensors (PS) obtained in the above-mentioned Example 3 and Comparative example 1, and the coating QCM sensors (NC) obtained in the above-mentioned Examples 4 and 5 were attached to a dissipation type quartz resonator microbalance QCM-D (E4, manufactured by Q-Sense Co.), and PBS was flown until a stable base line has been established in which change in the frequency became 1 Hz or less in one hour. Next, the frequency of the stabilized base line was made 0 Hz and PBS was flown for about 10 minutes. Subsequently, a solution in which 15 wt% fetal bovine serum (FBS), L-Glutamine, penicillin and streptomycin as antibiotics had been added to 41010 · Basal Medium Eagle (BME), no Glutamine (available from Thermo Fisher Scientific Inc.), or a liquid in which 0.1 g of γ-globulin human blood derived (available from Aldrich Corporation) had been dissolved in 1L of PBS was flown for about 30 minutes, thereafter, PBS was again flown for about 20 minutes, and then, a shift (Δf) of an adsorption induced frequency at the eleventh overtone was read. By using Q-Tools (manufactured by Q-Sense Co.) for analysis, a shift (Δf) of the adsorption induced frequency is converted into a mass (ng/cm²) per a unit surface area of a shift (Δf) of the adsorption induced frequency explained by the Sauerbrey's formula and shown as an attached amount of the biologically originated substance in FBS or an attached amount of a γ-globulin human blood derived in Tables 1 and 2. Incidentally, as the negative control, the QCM sensor (PS) or the QCM sensor (NC) which had not been subjected to coating treatment was used.

**[Table 1]**

| Attached mass (ng/cm²) per unit area of biologically originated substance in FBS on QCM sensor (PS) | |
|---|---|
| | Attached amount of biologically originated substance in FBS |
| Coating QCM sensor (PS) of Example 3 | 23 |
| Coating QCM sensor (PS) of Comparative example 1 | 107 |
| QCM sensor (PS) alone | 624 |

**[Table 2]**

| Attached mass (ng/cm²) of γ-globulin human blood derived per unit area on QCM sensor (NC) | |
|---|---|
| | Attached amount of γ-globulin human blood derived |
| Coating QCM sensor (NC) of Example 4 | 17 |
| Coating QCM sensor (NC) of Example 5 | 8 |
| QCM sensor (NC) alone | 929 |

### <Example 6>

The following respective processing steps were successively carried out to prepare a cell culture plate having the coating film of the present invention.
Treatment 1: The composition for forming a coating film prepared in Example 2 was filtered through a filter having a mesh size of 0.22 µm, then, added to a well of 96-well cell culture plate (manufactured by BD Biosciences, #351172) so as to be 200 µL (solid content: 1% by mass)/well, allowed to stand at room temperature for one hour and excess varnish was removed.
Treatment 2: The composition was dried by using an oven (manufactured by Advantec Toyo Kaisha, Ltd., dryer FC-612) at 50°C overnight. Thereafter, 200 µL of sterilized water was added per one well, and removed to carry out washing. Similarly, washing was further carried out twice to obtain a coated cell culture plate.

### <Test example 2: Cell attachment suppressing effect>

### (Preparation of coating plate)

The cell culture plate which had been subjected to coating obtained in Example 6 was used. As a positive control sample, a commercially available cell low adhesion plate (available from Corning Inc., #3474) was used. As a negative control, a 96-well cell culture plate (manufactured by BD Biosciences, #351172) which had not been subjected to coating was used.

### (Preparation of cells)

The cells used were mouse embryonic fibroblasts C3H10T1/2 (available from DS Pharma Biomedical Co., Ltd.). The medium used for culturing the cells was a BME medium (available from Thermo Fisher Scientific Inc.) containing 10% FBS (available from HyClone Laboratories, Inc.) and an L-glutamine-penicillin-streptomycin stabilized solution (available from SIGMA-ALDRICH Co. LLC.). The cells were stationally cultured in a CO₂ incubator at 37°C in the state of maintaining a 5% carbon dioxide concentration, by using a petri dish (10 mL of culture medium) having a diameter of 10 cm for 2 days or longer. Subsequently, the cells were washed with 5 ml of PBS, then, 1 mL of a trypsin-EDTA solution (available from Invitrogen Co.) was added thereto to peel the cells, and the cells were suspended in 10 mL of the above-mentioned medium, respectively. This suspension was centrifuged (manufactured by TOMY SEIKO CO., LTD., Type No. LC-200, 1,000 rpm/3 min, room temperature), then, the supernatant was removed, and the above-mentioned medium was added to prepare a cell suspension.

### (Cell attachment experiment)

To the plates prepared as mentioned above were added each 100 µL of the respective cell suspension so that it became 2×10³ cells/well. Thereafter, in the state of maintaining the 5% carbon dioxide concentration, it was allowed to stand in a CO₂ incubator at 37°C for 4 days.

### (Observation of cell attachment)

After 4 days from the culture, attachments of the cells to the plate of Example 6, the plates of the positive control and the negative control were compared based on the observation (magnification: 40-fold) by an inverted microscope (CKX31 manufactured by Olympus Corporation). In both of the plate of Example 6 and the plate of the positive control, attachment of the cells was hardly observed. The results (after 4 days of the culture) of the respective plates are shown in Fig. 1. In addition, 10 µL of Cell Counting Kit-8 solution (available from Dojindo Laboratories) was added per each well, and it was allowed to stand in a CO₂ incubator at 37°C for 2 hours. Thereafter, an absorbance at 450 nm was measured by an absorbance meter (SpectraMax, manufactured by Molecular Devices, LLC.). The respective measurement values are values in which the measurement value in the well to which only the medium was added was subtracted therefrom, respectively. The results are shown in Table 3.

**[Table 3]**

| Absorbance measurement | |
|---|---|
| | Absorbance |
| Example 6 | 0.045 |
| Positive control | 0.043 |
| Negative control | 0.969 |

As mentioned above, it was shown that the cells did not adhere to any plates except for the negative control. At this time, the non-adherent cells formed cell aggregates (spheroids).

From this result, the container in which the coating film of the present application is coated on the surface is useful as a cell culture container.

## Claims

1. A copolymer which is obtainable by polymerizing a monomer mixture containing at least compounds of the following formulae (A) and (B): 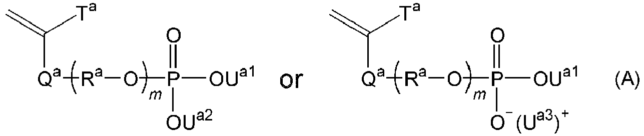 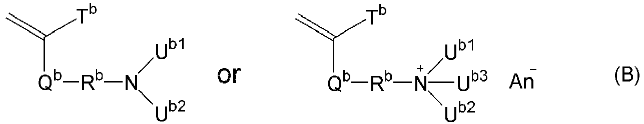 wherein
T^{a} and T^{b} each independently represent a hydrogen atom or a linear or branched alkyl group having 1 to 5 carbon atoms;
Q^{a} and Q^{b} each independently represent a single bond, an ester bond or an amide bond;
R^{a} and R^{b} each independently represent a linear or branched alkylene group having 1 to 10 carbon atoms which may be substituted by a halogen atom(s);
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms;
An⁻ represents an anion selected from the group consisting of a halide ion, an inorganic acid ion, a hydroxide ion and an isothiocyanate ion; and
m represents an integer of 0 to 6.

2. The copolymer according to Claim 1, wherein the monomer mixture further contains a compound of the following formula (C): 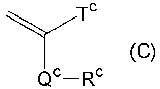 wherein
T^{c} each independently represents a hydrogen atom or a linear or branched alkyl group having 1 to 5 carbon atoms;
Q^{c} represents a single bond, an ether bond or an ester bond; and
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).

3. A composition for forming a coating film which comprises
(i) a copolymer which contains a recurring unit containing an organic group of the following formula (a) and a recurring unit containing an organic group of the following formula (b): 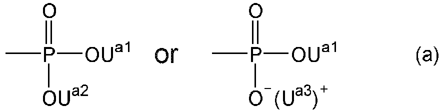 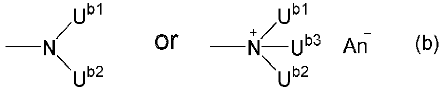 wherein
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms; and
An⁻ represents an anion selected from the group consisting of a halide ion, an inorganic acid ion, a hydroxide ion and an isothiocyanate ion, and
(ii) a solvent.

4. The composition according to Claim 3, wherein the copolymer further contains recurring units containing an organic group of the following formula (c):
-R^{c} (c)
wherein
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).

5. The composition according to Claim 3 or 4, wherein the copolymer contains recurring units of the following formulae (a1) and (b1): 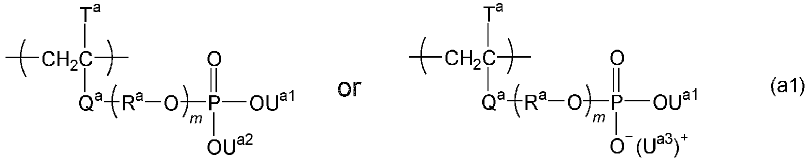 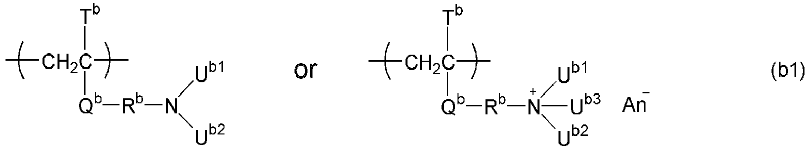 wherein
T^{a} and T^{b} each independently represent a hydrogen atom or a linear or branched alkyl group having 1 to 5 carbon atoms;
Q^{a} and Q^{b} each independently represent a single bond, an ester bond or an amide bond;
R^{a} and R^{b} each independently represent a linear or branched alkylene group having 1 to 10 carbon atoms which may be substituted by a halogen atom(s);
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms;
An⁻ represents an anion selected from the group consisting of a halide ion, an inorganic acid ion, a hydroxide ion and an isothiocyanate ion; and
m represents an integer of 0 to 6.

6. The composition according to any one of Claims 3 to 5, wherein the copolymer further contains recurring units of the following formula (c1): 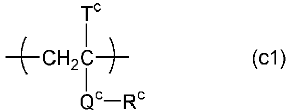 wherein
T^{c} each independently represents a hydrogen atom or a linear or branched alkyl group having 1 to 5 carbon atoms;
Q^{c} represents a single bond, an ether bond or an ester bond; and
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).

7. A coating film obtainable by a method which comprises a process of coating a composition for forming a coating film which contains a copolymer containing a recurring unit containing an organic group of the following formula (a) and a recurring unit containing an organic group of the following formula (b): 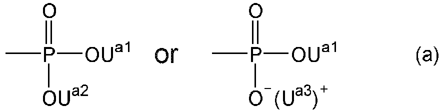 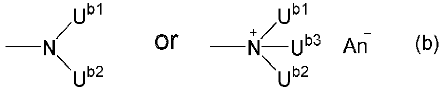 wherein
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms; and
An⁻ represents an anion selected from the group consisting of a halide ion, an inorganic acid ion, a hydroxide ion and an isothiocyanate ion, and
a solvent, onto a substrate.

8. The coating film according to Claim 7, wherein the copolymer further contains a recurring unit containing an organic group of the following formula (c):
-R^{c} (c)
wherein
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).

9. The coating film according to Claim 7 or 8, wherein the copolymer contains recurring units of the following formulae (a1) and (b1): 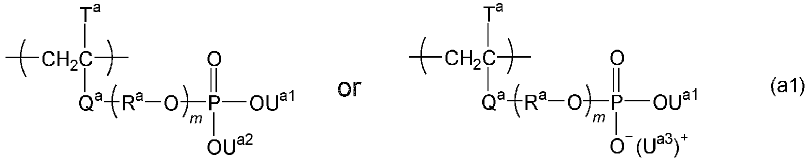 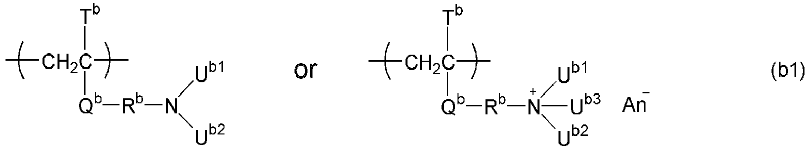 wherein
T^{a} and T^{b} each independently represent a hydrogen atom or a linear or branched alkyl group having 1 to 5 carbon atoms;
Q^{a} and Q^{b} each independently represent a single bond, an ester bond or an amide bond;
R^{a} and R^{b} each independently represent a linear or branched alkylene group having 1 to 10 carbon atoms which may be substituted by a halogen atom(s);
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms;
An⁻ represents an anion selected from the group consisting of a halide ion, an inorganic acid ion, a hydroxide ion and an isothiocyanate ion; and
m represents an integer of 0 to 6.

10. The coating film according to any one of Claims 7 to 9, wherein the copolymer further contains a recurring unit of the following formula (c1): 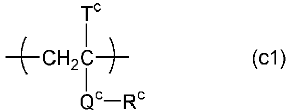 wherein
T^{c} each independently represents a hydrogen atom or a linear or branched alkyl group having 1 to 5 carbon atoms;
Q^{c} represents a single bond, an ether bond or an ester bond; and
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).

11. The coating film according to any one of Claims 7 to 10, wherein the method further comprises a process of washing a film obtained after a drying process with at least one kind of a solvent selected from the group consisting of water and an aqueous solution containing an electrolyte.

12. The coating film according to any one of Claims 7 to 11, wherein the film has a function of inhibiting adhesion of a biological substance.

13. A method for manufacturing a coating film comprising a process of coating a composition for forming a coating film which comprises a copolymer containing a recurring unit containing an organic group of the following formula (a) and a recurring unit containing an organic group of the following formula (b): 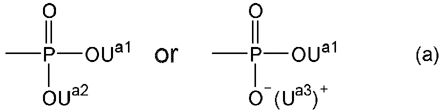 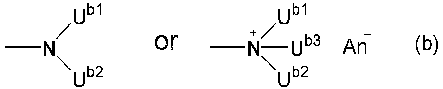 wherein
U^{a1} represents an aryl group having 6 to 10 carbon atoms or a linear or branched alkyl group having 1 to 5 carbon atoms, U^{a2} represents a hydrogen atom, U^{a3} represents an alkali metal;
U^{b1}, U^{b2} and U^{b3} each independently represent a hydrogen atom or a linear or branched alkyl group having 1 to 5 carbon atoms; and
An⁻ represents an anion selected from the group consisting of a halide ion, an inorganic acid ion, a hydroxide ion and an isothiocyanate ion, and
a solvent, onto a substrate.

14. The method for manufacturing a coating film according to Claim 13, wherein the copolymer further contains a recurring unit containing an organic group of the following formula (c):
-R^{c} (c)
wherein
R^{c} represents a linear or branched alkyl group having 1 to 18 carbon atoms, a cyclic hydrocarbon group having 3 to 10 carbon atoms, an aryl group having 6 to 10 carbon atoms, an aralkyl group having 7 to 15 carbon atoms or an aryloxyalkyl group having 7 to 15 carbon atoms, where the aryl portion may be substituted by a linear or branched alkyl group having 1 to 5 carbon atoms which may be substituted by a halogen atom(s).
